Europäisches Patentamt

European Patent Office

Office européen des brevets

(19)

(11) **EP 1 717 073 A1**

(12) **EUROPEAN PATENT APPLICATION**
published in accordance with Art. 158(3) EPC

(43) Date of publication:
**02.11.2006 Bulletin 2006/44**

(51) Int Cl.:
**B60H 1/32** *(2006.01)*

(21) Application number: **05709727.1**

(22) Date of filing: **04.02.2005**

(86) International application number:
**PCT/JP2005/001661**

(87) International publication number:
**WO 2005/077687 (25.08.2005 Gazette 2005/34)**

(84) Designated Contracting States:
**DE FR**

(30) Priority: **16.02.2004 JP 2004038027**

(71) Applicant: **Sanden Corporation**
**Isesaki-shi,**
**Gunma 372-8502 (JP)**

(72) Inventors:
• **TSUBOI, Masato,**
**Sanden Corporation**
**Isesaki-shi, Gunma 3728502 (JP)**

• **SUZUKI, Kenichi,**
**Sanden Corporation**
**Isesaki-shi, Gunma 3728502 (JP)**
• **IMAI, Tomonori,**
**Sanden Corporation**
**Isesaki-shi, Gunma 3728502 (JP)**

(74) Representative: **Haley, Stephen**
**Gill Jennings & Every LLP**
**Broadgate House**
**7 Eldon Street**
**London EC2M 7LH (GB)**

(54) **VEHICLE AIR CONDITIONER**

(57)     An air conditioning system for vehicles includes a compressor and a variable displacement compressor provided in a refrigeration cycle, means for operating the variable displacement compressor, compressor operation switching means for switching the compressor operation between the compressor and the variable displacement compressor, and variable displacement compressor feedforward displacement value calculation means for calculating a displacement control value of the variable displacement compressor as an input to the refrigeration cycle so as to obtain a target control displacement after the compressor operation is switched. After the operation is switched from the compressor to the variable displacement compressor, the variable displacement compressor is started based on the calculated variable displacement compressor feedforward displacement value. When the flow rate of refrigerant varies greatly upon operation switching between the compressor and the variable displacement compressor, it is possible to suppress deterioration of the comfortable feeling of passengers.

**FIG. 2**

## Description

The present invention relates to an air conditioning system for vehicles with a refrigeration cycle having refrigerant compressors, and more specifically, to control of an air conditioning system for vehicles having a variable displacement compressor.

In an air conditioning system for vehicles with a refrigeration cycle having a plurality of compressors, various control systems are proposed wherein the respective compressors are adequately switched in response to the vehicle running condition. In such an air conditioning system for vehicles, when the compressor operation is switched, an overshoot may occur in a feedback control, and a refrigerant flow rate in the refrigeration cycle may vary greatly. Therefore, the temperature of a cooler may vary greatly, the temperature of air blown into a vehicle interior and the temperature of the vehicle interior may vary, and there is a case where the thermally comfortable feeling of passengers is injured.

Accordingly, paying attention to such problems in the conventional control systems, an object of the present invention is to provide an air conditioning system for vehicles capable of suppressing deterioration of the thermally comfortable feeling of passengers, in an air conditioning for a vehicle wherein a cooler temperature varies greatly by an overshoot in a feedback control when compressor operation is switched.

To achieve the above-described object, an air conditioning system for vehicles according to the present invention comprises compressors different from each other, displacement control system switching means for switching a displacement control system A to a variable displacement control system B with respect to the displacement control system A controlled by a displacement control value "a" among displacement control values "a" and "b" for the compressors different from each other and the variable displacement control system B controlled by the displacement control value "b", and feedforward displacement value calculation means for the variable displacement control system B for calculating a displacement control value of the variable displacement control system B as an input to a control object so as to obtain a target control displacement after the displacement control system is switched. After the displacement control system is switched from the displacement control system A to the variable displacement control system B, the variable displacement control system B is started based on a feedforward displacement value calculated by the feedforward displacement value calculation means for the variable displacement control system B.

Further, as a more concrete embodiment, an air conditioning system for vehicles according to the present invention comprises a refrigeration cycle, a compressor and a variable displacement compressor provided in the refrigeration cycle, means for operating the variable displacement compressor, compressor operation switching means for switching the compressor operation between the compressor and the variable displacement compressor, and variable displacement compressor feedforward displacement value calculation means for calculating a displacement control value of the variable displacement compressor as an input to the refrigeration cycle so as to obtain a target control displacement after the compressor operation is switched. After the operation is switched from the compressor to the variable displacement compressor, the variable displacement compressor is started based on a calculated variable displacement compressor feedforward displacement value.

In such an air conditioning system for vehicles according to the present invention, a structure may be employed wherein the system further comprises refrigeration cycle load recognition means for estimating or detecting a physical value having a correlation with a thermal load applied to the refrigeration cycle. In this structure, the variable displacement compressor feedforward displacement value is calculated referring to a refrigeration cycle load value recognized by the refrigeration cycle load recognition means before the operation is switched to the variable displacement compressor.

Further, a structure may be employed wherein the system further comprises an air duct, a blower for sending air into a vehicle interior through the air duct, a cooler connected to the refrigeration cycle for cooling the air sent to the vehicle interior, cooler temperature recognition means for estimating or detecting a physical value having a correlation with a temperature of the cooler or a temperature of air passing through the cooler, target cooler temperature calculation means for calculating a target cooler temperature referring to a refrigeration cycle load, variable displacement compressor feedback displacement value calculation means for calculating a feedback displacement value so as to control the displacement of the variable displacement compressor at a predetermined displacement referring to a deviation between the target cooler temperature and the value recognized as cooler temperature, and time calculation means for calculating a time having a correlation with the refrigeration cycle load, until that the temperature of the cooler or the temperature of air passing through the cooler reaches a predetermined temperature. In this structure, after the operation is switched from the compressor to the variable displacement compressor, the variable displacement compressor is started based on the feedforward displacement value calculated by the variable displacement compressor feedforward displacement value calculation means, and after the time calculated by the time calculation means passes, the operation of the variable displacement compressor is controlled based on the feedforward displacement value and the feedback displacement value calculated by the variable displacement compressor feedback displacement value calculation means. In this case, the variable displacement compressor may be started based on only the feedforward displacement value calculated by the variable displacement compressor feedforward displacement value calculation means without referring to the cooler temperature value recognized by the cooler temperature recognition means.

Further, a structure may be employed wherein the system further comprises an air duct, a blower for sending air into a vehicle interior through the air duct, a cooler connected to the refrigeration cycle for cooling the air sent to the vehicle interior, and at least one of cooler temperature recognition means for estimating or detecting a physical value having a correlation with a temperature of the cooler or a temperature of air passing through the cooler, outside air temperature recognition means for estimating or detecting a physical value having a correlation with a temperature of outside air, vehicle interior air temperature recognition means for estimating or detecting a physical value having a correlation with a temperature of vehicle interior air, cooler entrance air temperature recognition means for estimating or detecting a physical value having a correlation with a temperature of air at an entrance of the cooler, sunshine amount recognition means for estimating or detecting a physical value having a correlation with an amount of sunshine, blown air amount recognition means for estimating or detecting a physical value having a correlation with an amount of air blown by the blower, target cooler temperature calculation means for calculating a target value of the cooler temperature, and vehicle running speed recognition means for estimating or detecting a physical value having a correlation with a running speed of a vehicle. In this structure, a load of the refrigeration cycle is estimated or detected by referring to at least one of a cooler temperature recognized value, an outside air temperature recognized value, a vehicle interior air temperature recognized value, a cooler entrance air temperature recognized value, a sunshine amount recognized value, a blown air amount recognized value, a target cooler temperature, and a vehicle running speed recognized value.

In such an air conditioning system for vehicles according to the present invention, as the displacement varying compression mechanism of the variable displacement compressor, a displacement varying compression mechanism controlled by a displacement control signal or a displacement varying compression mechanism controlled by rotational speed control may be employed.

In the above-described air conditioning system for vehicles according to the present invention, when the compressor operation is switched, because the variable displacement compressor is started based on an optimum feedforward displacement value corresponding to a refrigeration cycle load at that time, it is possible to suppress a great variation of the cooler temperature, thereby suppressing a variation of the temperature of air blown into a vehicle interior and the temperature of the vehicle interior.

In the air conditioning system for vehicles according to the present invention, when the compressor operation is switched, even in a case where the refrigerant flow rate in the refrigeration cycle varies greatly, the cooler temperature does not vary greatly, the variation in temperature of air blown into a vehicle interior and the vehicle interior may be suppressed, and ultimately, the thermally comfortable feeling of passengers may be prevented from being injured.

**In the drawings:**

[Fig. 1] Fig. 1 is a schematic equipment disposition diagram of an air conditioning system for vehicles according to an embodiment of the present invention.

[Fig. 2] Fig. 2 is a flowchart, showing an example of a control for the air conditioning system for vehicles depicted in Fig. 1.

[Fig. 3] Fig. 3 is a flowchart, showing an example of a conventional control for an air conditioning system for vehicles.

[Fig. 4] Fig. 4 is a diagram of characteristics, showing an example of a control when the compressor operation is switched from a compressor to a variable displacement compressor in the control depicted in Fig. 2, and an example of a conventional control.

| | |
|---|---|
| 1: | air conditioning system for vehicles |
| 2: | air duct |
| 3: | introduction port for outside air or/and inside air |
| 4: | blower |
| 5: | motor for driving a blower |
| 6: | evaporator as a cooler |
| 7: | refrigeration cycle |
| 8: | main controller |
| 9: | compressor displacement control signal |
| 10: | variable displacement compressor displacement control signal |
| 11: | compressor |
| 12: | variable displacement compressor |
| 13: | cooling fan |
| 14: | condenser |
| 15: | liquid receiver |
| 16: | expansion valve |
| 17: | cooler entrance air temperature sensor |
| 18: | cooler exit air temperature sensor |

19: vehicle interior temperature sensor
20: outside air temperature sensor
21: sunshine sensor

Hereinafter, desirable embodiments of the present invention will be explained referring to figures.

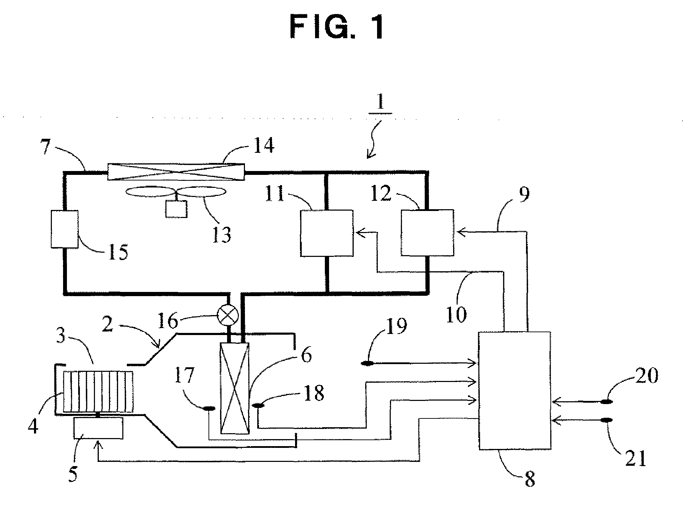

Fig. 1 depicts a schematic equipment disposition diagram of an air conditioning system for vehicles according to an embodiment of the present invention. In air conditioning system for vehicles 1 depicted in Fig. 1, a blower 4 for sending air sucked through an introduction port 3 for outside air or/and inside air is provided at an upstream position in an air duct 2 opening toward a vehicle interior. The blower 4 is driven by a motor 5 for driving the blower. An evaporator 6 is provided at a position downstream blower 4 as a cooler for cooling air sent. As needed, a heater core may be provided at a position downstream evaporator 6 as a heater, although it is not depicted. The air having passed through evaporator 6 and having been cooled by the evaporator 6 is blown into a vehicle interior.

A refrigeration cycle 7 including the above-described evaporator 6 is provided to the above-described air conditioning system for vehicles 1. Refrigeration cycle 7 is constructed as a refrigerant circuit in which respective equipment are connected to each other via refrigerant tubes, and in this refrigeration cycle 7, a compressor 11 which can be controlled in displacement by a compressor displacement control signal 9 sent from a main controller 8, and a variable displacement compressor 12 which can be controlled in displacement variably by a variable displacement compressor displacement control signal 10, are provided. In this variable displacement compressor 12, the drive force may be taken, for example, from an engine of a vehicle, or, it may be driven by a motor and the displacement may be controlled variably by the control of the rotational speed. In refrigeration cycle 7, a condenser 14 which condenses the high-temperature and highpressure refrigerant compressed by compressor 11 and to which a cooling fan 13 is provided, a liquid receiver 15 for separating the condensed refrigerant into gas/liquid phases, an expansion valve 16 for reducing in pressure and expanding the refrigerant sent from the liquid receiver 15, and evaporator 6 for evaporating the refrigerant sent from the expansion valve 16 and cooling the air sent through air duct 2 by heat exchange between the refrigerant and the air, are disposed in this order. The refrigerant sent from evaporator 6 is sucked to the above-described compressor 11 or the above-described variable displacement compressor 12, and compressed again.

In this embodiment, a signal detected by a cooler exit air temperature sensor 18 provided as an evaporator temperature detection means for detecting a temperature of the evaporator or a temperature of air at an exit of the evaporator (Te), and a signal of an evaporator entrance air temperature (Tein) detected by a cooler entrance air temperature sensor 17, are sent to main controller 8. Further, a signal of a vehicle interior temperature (Tr) detected by a vehicle interior temperature sensor 19, a signal of an outside air temperature (Tamb) detected by an outside air temperature sensor 20, and a signal of a sunshine amount (Rsun) detected by a sunshine sensor 21, are also sent to main controller 8, respectively. Further, a voltage signal (a signal of rotational speed) (Vblw) is outputted from main controller 8 to blower driving motor 5 for controlling the amount of air sent by blower 4.

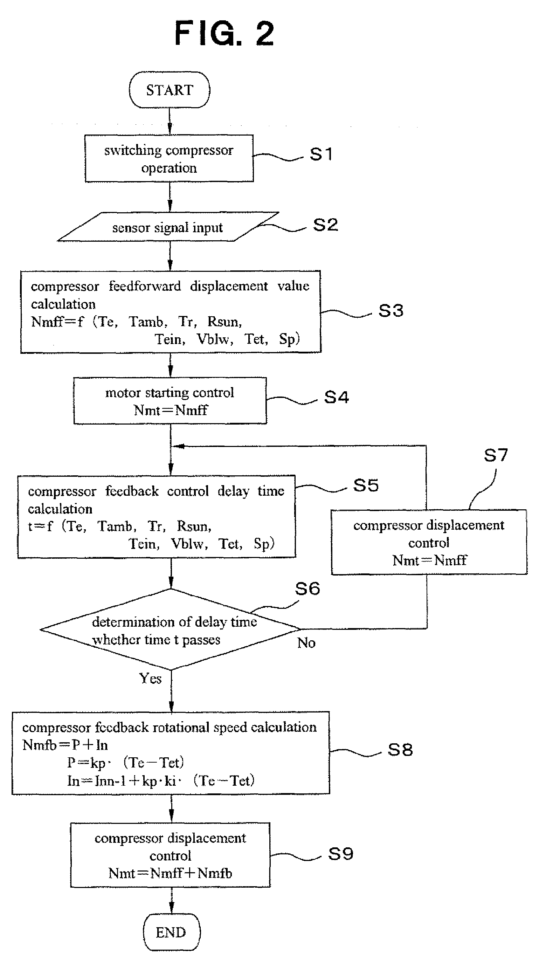

In this embodiment having such a structure, for example, according to the flowchart depicted in Fig. 2, when the compressor operation is switched, the displacement control at the time of starting the variable displacement compressor in accordance with a refrigeration cycle load, etc. is carried out by main controller 8. In the flow shown in Fig. 2, if the compressor operation is switched (step S1), main controller 8 reads the information inputted from the aforementioned respective sensors (step S2), a feedforward displacement value (Nmff) for variable displacement compressor 12 is calculated from the information inputted from the respective sensors, for example, by the following equation (step S3).
$Nmff = f(Te, Tamb, Tr, Rsun, Tein, Vblw, Tet, Sp)$
Where, Tet is a target evaporator temperature, and Sp is a vehicle running speed.

Variable displacement compressor 12 is controlled in starting, based on thus calculated feedforward displacement value (Nmff). Namely, when variable displacement compressor 12 is started, the start is initiated by providing this calculated displacement value (Nmff) as the feedforward displacement value (step S4). In other words, a displacement control target value (Nmt) of variable displacement compressor 12 is set at this feedforward displacement value (Nmff), and the variable displacement compressor 12 is started based on only this feedforward displacement value (Nmff). In a case where variable displacement compressor 12 is driven by a motor, it is applied to the starting control of this motor. Because this feedforward displacement value (Nmff) is calculated as an adequate displacement value in accordance with an actual refrigeration cycle load at that time, even in a case where the refrigerant flow rate greatly varies at the time of switching the compressor operation, it is possible to obtain an adequate displacement value at which the temperature of the cooler (evaporator 6) does not vary greatly, a great variation of the temperature of the air having passed through the cooler and blown into the vehicle interior, ultimately, a great variation of the temperature of the vehicle interior, may be suppressed, and the thermally comfortable feeling of passengers may be prevented from being injured.

After variable displacement compressor 12 is thus started, a variable displacement compressor feedback control delay time (t) is calculated, for example, by the following equation (step S5), and a variable displacement compressor feedback rotational speed (Nmfb) (in a case of rotational speed control) is calculated by the following equation (step S8).

$$t=f(Te, Tamb, Tr, Rsun, Tein, Vblw, Tet, Sp)$$

$$Nmfb=P(proportional\ term)+In(Integral\ term)$$

$$P=Kp \cdot (Te\text{-}Tet)$$

$$In=Inn\text{-}1 + Kp \cdot Ki \cdot (Te\text{-}Tet)$$

Where, Kp is a proportional constant (gain), Ki is an integral constant, and Inn-1 is a previous value.

Then, it is determined whether the above-described delay time (t) has passed or not (step S6), and until a predetermined time passes, the variable displacement compressor displacement control is carried out by setting the feedforward displacement value (Nmff) as a target (step S7). When the above-described delay time (t) has passed, following step S8, the variable displacement compressor displacement control is carried out by setting the sum of the feedforward displacement value (Nmff) and the feedback displacement value (Nmfb) (step S9). By this control, until the starting is stabilized, even if the refrigerant flow rate varies during the feedforward control, the control for air conditioning may be started without generating a great variation of blown air, etc. After the starting is stabilized, by adding the feedback control, a more accurate control to a target temperature may be achieved.

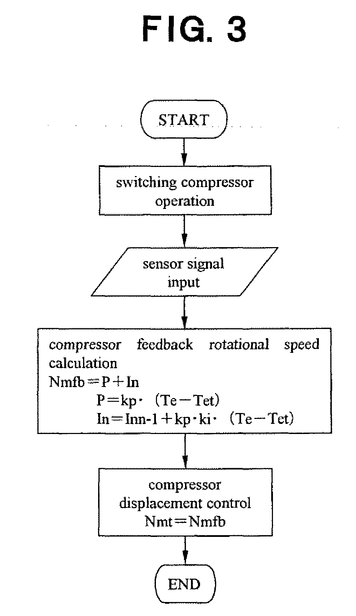

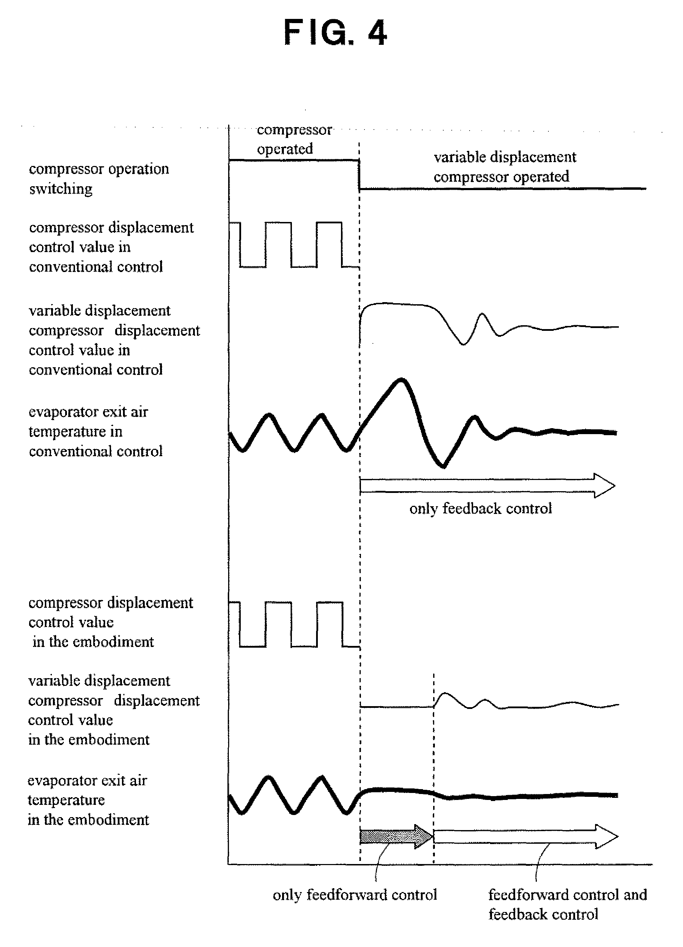

For comparison, a general conventional control due to only feedback is shown in Fig. 3. In the conventional control, according to the flow depicted in Fig. 3, when the compressor operation is switched, respective input signals/ variables are inputted to a main controller, and the displacement control of a variable displacement compressor is carried out in accordance with refrigeration cycle load. Therefore, as the comparison between the control according to the present invention and the conventional control is shown in Fig. 4, in the conventional control, in a case where the refrigerant flow rate greatly varies after switching of the compressor operation, because an overshoot occurs in the displacement control value by the feedback control for suppressing the variation of the refrigerant flow rate, the refrigerant flow rate is to be varied. Therefore, the temperature of air blown into a vehicle interior and the temperature of the vehicle interior may vary by the temperature variation of a cooler, and there is a case where the thermally comfortable feeling of passengers is injured. In the control according to the present invention (the control according to the embodiment of the present invention), however, as shown in Fig. 4, such a problem can be solved by the feedforward control after switching of the compressor operation, and after a predetermined time passes, adding a feedback control, a desirable control state similar to that in the conventional control can be realized.

The air conditioning system for vehicles according to the present invention can be suitably applied to any air conditioning system for vehicles with a refrigeration cycle having a compressor and a variable displacement compressor, and in particular, it is suitable to be applied to a case requiring to prevent deterioration of the thermally comfortable feeling of passengers when the compressor operation is switched.

## Claims

1. An air conditioning system for vehicles comprising:

   compressors different from each other;
   displacement control system switching means for switching a displacement control system A to a variable displacement control system B with respect to said displacement control system A controlled by a displacement control value "a" among displacement control values "a" and "b" for said compressors different from each other and said variable displacement control system B controlled by said displacement control value "b"; and
   feedforward displacement value calculation means for said variable displacement control system B for calculating a displacement control value of said variable displacement control system B as an input to a control object so as to obtain a target control displacement after the displacement control system is switched,

   wherein, after the displacement control system is switched from said displacement control system A to said variable displacement control system B, said variable displacement control system B is started based on a feedforward displacement value calculated by said feedforward displacement value calculation means for said variable displacement control system B.

2. An air conditioning system for vehicles comprising:

a refrigeration cycle;
a compressor and a variable displacement compressor provided in said refrigeration cycle;
means for operating said variable displacement compressor;
compressor operation switching means for switching the compressor operation between said compressor and said variable displacement compressor; and
variable displacement compressor feedforward displacement value calculation means for calculating a displacement control value of said variable displacement compressor as an input to said refrigeration cycle so as to obtain a target control displacement after the compressor operation is switched,

wherein, after the operation is switched from said compressor to said variable displacement compressor, said variable displacement compressor is started based on a calculated variable displacement compressor feedforward displacement value.

3. The air conditioning system for vehicles according to claim 2 further comprising:

refrigeration cycle load recognition means for estimating or detecting a physical value having a correlation with a thermal load applied to said refrigeration cycle,

wherein said variable displacement compressor feedforward displacement value is calculated referring to a refrigeration cycle load value recognized by said refrigeration cycle load recognition means before the operation is switched to said variable displacement compressor.

4. The air conditioning system for vehicles according to claim 3 further comprising:

an air duct;
a blower for sending air into a vehicle interior through said air duct;
a cooler connected to said refrigeration cycle for cooling said air sent to said vehicle interior;
cooler temperature recognition means for estimating or detecting a physical value having a correlation with a temperature of said cooler or a temperature of air passing through said cooler;
target cooler temperature calculation means for calculating a target cooler temperature referring to a refrigeration cycle load;
variable displacement compressor feedback displacement value calculation means for calculating a feedback displacement value so as to control the displacement of said variable displacement compressor at a predetermined displacement referring to a deviation between said target cooler temperature and said value recognized as cooler temperature; and
time calculation means for calculating a time having a correlation with said refrigeration cycle load, until that said temperature of said cooler or said temperature of air passing through said cooler reaches a predetermined temperature,

Wherein, after the operation is switched from said compressor to said variable displacement compressor, said variable displacement compressor is started based on said feedforward displacement value calculated by said variable displacement compressor feedforward displacement value calculation means, and after said time calculated by said time calculation means passes, the operation of said variable displacement compressor is controlled based on said feedforward displacement value and said feedback displacement value calculated by said variable displacement compressor feedback displacement value calculation means.

5. The air conditioning system for vehicles according to claim 4, wherein said variable displacement compressor is started based on only said feedforward displacement value calculated by said variable displacement compressor feedforward displacement value calculation means without referring to said cooler temperature value recognized by said cooler temperature recognition means.

6. The air conditioning system for vehicles according to claim 2 further comprising:

an air duct;

a blower for sending air into a vehicle interior through said air duct;

a cooler connected to said refrigeration cycle for cooling said air sent to said vehicle interior; and

at least one of cooler temperature recognition means for estimating or detecting a physical value having a correlation with a temperature of said cooler or a temperature of air passing through said cooler, outside air temperature recognition means for estimating or detecting a physical value having a correlation with a temperature of outside air, vehicle interior air temperature recognition means for estimating or detecting a physical value having a correlation with a temperature of vehicle interior air, cooler entrance air temperature recognition means for estimating or detecting a physical value having a correlation with a temperature of air at an entrance of said cooler, sunshine amount recognition means for estimating or detecting a physical value having a correlation with an amount of sunshine, blown air amount recognition means for estimating or detecting a physical value having a correlation with an amount of air blown by said blower, target cooler temperature calculation means for calculating a target value of said cooler temperature, and vehicle running speed recognition means for estimating or detecting a physical value having a correlation with a running speed of a vehicle,

Wherein a load of said refrigeration cycle is estimated or detected by referring to at least one of a cooler temperature recognized value, an outside air temperature recognized value, a vehicle interior air temperature recognized value, a cooler entrance air temperature recognized value, a sunshine amount recognized value, a blown air amount recognized value, a target cooler temperature, and a vehicle running speed recognized value.

7. The air conditioning system for vehicles according to any of claims 2 to 6, wherein a displacement varying compression mechanism of said variable displacement compressor comprises a displacement varying compression mechanism controlled by a displacement control signal or a displacement varying compression mechanism controlled by rotational speed control.

# FIG. 1

# FIG. 2

START

switching compressor
operation — S1

sensor signal input — S2

compressor feedforward displacement value
calculation
Nmff=f (Te, Tamb, Tr, Rsun,
Tein, Vblw, Tet, Sp) — S3

motor starting control
Nmt=Nmff — S4

compressor feedback control delay time
calculation
t=f (Te, Tamb, Tr, Rsun,
Tein, Vblw, Tet, Sp) — S5

S7

compressor displacement
control
Nmt=Nmff — S7

determination of delay time
whether time t passes — S6

No

Yes

compressor feedback rotational speed calculation
Nmfb=P+In
P=kp· (Te−Tet)
In=Inn-1+kp·ki· (Te−Tet) — S8

compressor displacement
control
Nmt=Nmff+Nmfb — S9

END

# FIG. 3

START

switching compressor
operation

sensor signal
input

compressor  feedback  rotational  speed
calculation

$Nmfb = P + In$

$P = kp \cdot (Te - Tet)$

$In = Inn\text{-}1 + kp \cdot ki \cdot (Te - Tet)$

compressor
displacement control

$Nmt = Nmfb$

END

EP 1 717 073 A1

# FIG. 4

compressor operation
switching

compressor displacement
control value in
conventional control

variable displacement
compressor  displacement
control value in
conventional control

evaporator exit air
temperature in
conventional control

compressor displacement
control value
in the embodiment

variable displacement
compressor  displacement
control value
in the embodiment

evaporator exit air
temperature
in the embodiment

compressor
operated

variable displacement
compressor operated

only feedback control

only feedforward control

feedforward control and
feedback control

11

## INTERNATIONAL SEARCH REPORT

| | International application No. |
|---|---|
| | PCT/JP2005/001661 |

A. CLASSIFICATION OF SUBJECT MATTER
Int.Cl⁷ B60H1/32

According to International Patent Classification (IPC) or to both national classification and IPC

B. FIELDS SEARCHED

Minimum documentation searched (classification system followed by classification symbols)
Int.Cl⁷ B60H1/32, F25B1/00

Documentation searched other than minimum documentation to the extent that such documents are included in the fields searched
Jitsuyo Shinan Koho       1922-1996    Jitsuyo Shinan Toroku Koho    1996-2005
Kokai Jitsuyo Shinan Koho   1971-2005    Toroku Jitsuyo Shinan Koho    1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-211953 A  (Sanden Corp.),<br>30 July, 2003 (30.07.03),<br>Claim 6; Par. Nos. [0014], [0025] to [0027],<br>[0033], [0034]; Figs. 4, 6, 9, 10<br>& US 2003/136138 A1      & EP 1331115 A2 | 1-3,6,7 |
| Y | JP 05-270255 A  (Sanden Corp.),<br>19 October, 1993 (19.10.93),<br>Par. Nos. [0004] to [0008], [0016], [0017],<br>[0031], [0039]; Figs. 1 to 5<br>& US 5315841 A1          & EP 551008 A1<br>& DE 69208855 C | 1-3,6,7 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>18 March, 2005 (18.03.05) | Date of mailing of the international search report<br>05 April, 2005 (05.04.05) |
|---|---|
| Name and mailing address of the ISA/<br>Japanese Patent Office | Authorized officer |
| Facsimile No. | Telephone No. |

Form PCT/ISA/210 (second sheet) (January 2004)